# EUROPEAN PATENT SPECIFICATION

(11) **EP 1 615 972 B1**
(45) Date of publication and mention of the grant of the patent: **11.11.2009**
(21) Application number: 04727385.9
(22) Date of filing: 14.04.2004
(51) Int. Cl.: C08L 83/04, C08K 3/22, C08K 3/00

(54) **THERMOCONDUCTIVE ADDITION-CURABLE LIQUID SILICONE RUBBER COMPOSITION AND COATED FIXING ROLL**
WÄRMELEITENDE, ADDITIONSVERNETZENDE, FLÜSSIGE SILIKONKAUTSCHUKMISCHUNG UND BESCHICHTETE FIXIERWALZE
COMPOSITION DE CAOUTCHOUC DE SILICONE LIQUIDE RETICULABLE PAR ADDITION, THERMOCONDUCTRICE, ET ROULEAUX DE FIXATION ENDUITS

(30) Priority: 15.04.2003 JP 2003110557
(43) Date of publication of application: 18.01.2006
(73) Proprietor: Dow Corning Toray Co., Ltd., Tokyo (JP)
(72) Inventor: YOSHIDA, Hiroaki, c/o Dow Corning Toray Sil Co Ltd, Ichihara-shi, Chiba 299-0108 (JP); TSUJI, Yuichi, c/o Dow Corning Toray Sil. Co., Ltd, Ichihara-shi, Chiba 299-0108 (JP)
(74) Representative: Gillard, Richard Edward
(86) International application number: PCT/JP2004/005336
(87) International publication number: WO 2004/092278

(56) References cited:
- EP-A- 1 184 421
- PATENT ABSTRACTS OF JAPAN vol. 1999, no. 08, 30 June 1999 (1999-06-30) & JP 11 060955 A (SHIN ETSU CHEM CO LTD), 5 March 1999 (1999-03-05)

## Description

### FIELD OF THE INVENTION

This invention relates to a thermoconductive addition-curable liquid silicone rubber composition and a coated fixing roll. More particularly, this invention relates to a thermoconductive addition-curable liquid silicone rubber composition that exhibits excellent adherence to substrate in contact with the composition during its cure and that after curing exhibits a fully satisfactory strength and high thermal conductivity and does not exhibit changes in these properties even during long-term heating, and to a coated fixing roll comprising a fluororesin layer or a fluororubber layer disposed on the peripheral surface of a roll shaft, and a silicone rubber layer interposed between the fluororesin layer or the fluororubber layer and the roll shaft.

### BACKGROUND OF THE INVENTION

Silicone rubber has been used in the heat fixing rolls employed in, for example, electrophotographic copiers, electronic printers, and facsimile machines. Silicone rubber has been used in this application because its heat resistance is superior to that of other rubbers. The addition-curable silicone rubber compositions used in heat fixing rolls have mainly been compositions that contain crystalline silica, for example, quartz powder. For example, Japanese Unexamined Patent Application Publication Number (hereinafter referred to as Kokai) Hei 5-297747 (297,747/1993) teaches a silicone rubber composition that is used for heat fixing silicone rubber rollers. This composition contains quartz powder and iron oxide. Kokai Hei 10-222558 (222,558/1998) teaches an addition-curable liquid silicone rubber composition for fluororesin-coated fixing rolls; this composition contains iron oxide having a particular particle size and crystalline silica. The addition-curable silicone rubber composition for fluororesin- or fluorolatex-coated silicone rubber fixing rolls disclosed in Kokai Hei 11-60955 (60,955/1999) contains filler, cerium oxide, and iron oxide.

Silicone rubbers with high thermal conductivities have been used in recent years in response to faster printing speeds and shorter machine warm-up times. However, various problems occur when the content of crystalline silica or prior-art filler in the above-described silicone rubber compositions is increased in pursuit of improved thermal conductivities. These problems include failure to obtain an adequate improvement in the thermal conductivity and, with respect to long-term use under heating, an inability to exhibit a stable performance due to changes in such physical properties as hardness, a reduction in adherence to the metal core, and/or shortening of the device life.

This has led to the use of thermoconductive liquid silicone rubber compositions loaded with large amounts of thermoconductive filler. As compared to the crystalline silica and prior-art fillers referenced above, thermoconductive fillers exhibit excellent thermal conductivities at relatively low fill levels. Thermoconductive liquid silicone rubber compositions loaded with large amounts of alumina micropowder are disclosed in, for example, Kokai Hei 9-12893 (12,893/1997), Kokai Hei 10-39666 (39,666/1998), Kokai Hei 11-116806 (116,806/1999), Kokai Hei 11-158383 (158,383/1999), and Kokai 2002-72728.

However, for these silicone rubber compositions as well, it has been found that, depending on the particular conditions of use, the problems of impaired adhesion to the metal core and unstable physical properties (e.g., hardness) during long-term use under heating still occur. For example, during application as the covering for rolls that undergo high-speed rotation at high roll-to-roll pressures while heated, the silicone rubber layer will rupture or peel - either initially or after long-term use in a heated state - due to inadequate strength by the cured material. Reinforcing fillers such as finely divided silica are typically used to improve the strength of cured silicone rubber. However, there are limits on their levels of addition since the addition of such reinforcing fillers to a thermoconductive liquid silicone rubber composition containing large amounts of thermoconductive filler results in a substantial increase in the pre-cure viscosity, with has a negative effect on the injectability and workability. In the end, then, one has been left with the problems of an inadequate reinforcement and a distinct tendency for the physical properties to change during long-term use under heating.

### SUMMARY OF THE INVENTION

The object of this invention is to provide a thermoconductive liquid silicone rubber composition that exhibits excellent adherence to substrate in contact with the composition during its cure and that after curing exhibits a fully satisfactory strength and high thermal conductivity and does not exhibit changes in these properties even when subjected to long-term heating, and to provide a coated fixing roll comprising a fluororesin layer or a fluororubber layer disposed on the peripheral surface of a roll shaft, and a silicone rubber layer interposed between the fluororesin layer or the fluororubber layer and the roll shaft, which silicone rubber layer being the cured product of the aforementioned thermocondutive liquid silicone rubber composition.

The inventors achieved this invention as a result of intensive investigations into the problems described above. More specifically, the thermoconductive addition-curable liquid silicone rubber composition according to this invention characteristically has a thermal conductivity of at least 0.3 W/(m·K) after curing and comprises
(A) 100 parts by weight of liquid diorganopolysiloxane that has a viscosity of 100 to 100,000 mPa·s and contains at least two silicon-bonded alkenyl groups in each molecule,
(B) 50 to 600 parts by weight of alumina micropowder that has an average particle size of 0.1 to 50 µm,
(C) 20 to 100 parts by weight of iron oxide micropowder that has an average particle size of 0.01 to 0.5 µm,
(D) 0.1 to 2.0 parts by weight of cerium oxide micropowder, cerium hydroxide micropowder, or cerium-containing heteroorganosiloxane,
(E) organopolysiloxane that contains at least two silicon-bonded hydrogen atoms in each molecule, wherein the component (E) content provides from 0.3 to 5 moles silicon-bonded hydrogen in component (E) per 1 mole silicon-bonded alkenyl in component (A), and
(F) platinum catalyst in a catalytic quantity,
and the coated fixing roll according to the invention comprises coated fixing roll comprising a fluororesin layer or a fluororubber layer disposed on the peripheral surface of a roll shaft, and a silicone rubber layer interposed between the fluororesin layer or the fluororubber layer and the roll shaft, which silicone rubber layer being the cured product of the aforementioned thermoconductive addition-curable liquid silicone rubber composition.

### BEST MODE FOR CARRYING OUT THE INVENTION

This invention is described in detail herein below. The liquid diorganopolysiloxane (A) has a viscosity of 100 to 100,000 mPa·s and contains at least two silicon-bonded alkenyl groups in each molecule. This liquid diorganopolysiloxane is the main component for generating a rubber upon the crosslinking of the composition according to the present invention. The subject diorganopolysiloxane is represented by the average unit formula RₙSiO_{(4-n)/2} wherein the subscript n is 1.9 to 2.1 and R is alkyl such as methyl, ethyl, propyl, butyl, pentyl, and hexyl; alkenyl such as vinyl, allyl, propenyl, butenyl, pentenyl, hexenyl, and heptenyl; aryl such as phenyl, tolyl, and xylyl; aralkyl such as benzyl and phenethyl; or halogen-substituted monovalent hydrocarbyl such as 3-chloropropyl and 3,3,3-trifluoropropyl. The molecular structure of component (A) is specifically straight chain or partially branched straight chain and preferably is straight chain. The alkenyl content in R for this diorganopolysiloxane is generally 0.01 to 5 mole %. The diorganopolysiloxane under consideration is exemplified by trimethylsiloxy-endblocked dimethylsiloxane-methylvinylsiloxane copolymers, trimethylsiloxy-endblocked methylvinylpolysiloxanes, trimethylsiloxy-endblocked methylvinylsiloxane-methylphenylsiloxane copolymers, trimethylsiloxy-endblocked dimethylsiloxane-methylvinylsiloxane-methylphenylsiloxane copolymers, dimethylvinylsiloxy-endblocked dimethylsiloxane-methylvinylsiloxane copolymers, dimethylvinylsiloxy-endblocked methylvinylpolysiloxanes, dimethylvinylsiloxy-endblocked methylvinylsiloxane-methylphenylsiloxane copolymers, dimethylvinylsiloxy-endblocked dimethylsiloxane-methylvinylsiloxane-methylphenylsiloxane copolymers, dimethylvinylsiloxy-endblocked dimethylsiloxane-methyl(3,3,3-trifluoropropyl)siloxane copolymers, and dimethylvinylsiloxy-endblocked dimethylsiloxane-methylvinylsiloxane-methyl(3,3,3-trifluoropropyl)siloxane copolymers.

The alumina micropowder (B) functions to improve the post-cure thermal conductivity of the inventive composition. The shape of component (B) is not critical and this component may be spherical or irregular. The average particle size of component (B) is in the range of 0.1 to 50 µm, and is preferably in the range of 0.1 to 20 µm in order to prevent sedimentation of the alumina micropowder during long-term storage of the composition according to the present invention. In order for the inventive composition to provide a post-cure hardness that exhibits good stability with respect to heating, the ignition loss, as measured by the ignition loss method specified in Japanese Industrial Standard (JIS) H 1901 (heating temperature = 1,100°C, heating time = 1 hour), is preferably no more than 0.25 weight %.

The surface of the alumina micropowder (B) is preferably treated with a surface treatment agent because this facilitates mixing with component (A), prevents separation and sedimentation of component (B) from the inventive composition, and can reduce the viscosity of the inventive composition. The surface treatment agent may be exemplified by organoalkoxysilanes such as methyltrimethoxysilane, methyltriethoxysilane, vinyltrimethoxysilane, γ-methacryloxypropyltrimethoxysilane, and n-octyltrimethoxysilane; tetraalkoxysilanes and their partial hydrolysis and condensation products, such as tetramethoxysilane, tetrapropoxysilane, and ethylpolysilicate; organohalosilanes such as dimethyldichlorosilane and methyltrichlorosilane; organosilazanes such as hexamethyldisilazane; organosilicon compounds such as dimethylhydroxysiloxy-endbiocked diorganosiloxane oligomers and cyclopolydiorganosiloxanes; and amine compounds such as tri-n-butylamine and tri-n-octylamine. Organosilicon compounds are preferred among the preceding for their low cure inhibition, while organoalkoxysilanes and tetraalkoxysilanes and their partial hydrolysis and condensation products are particularly preferred from the standpoint of the ease of the surface treatment process. Surface treatment of the alumina micropowder (B) may be carried out, for example, by adding the surface treatment agent to component (B) and heating and stirring in a mixer, or by adding the surface treatment agent at the same time component (B) is added to component (A) and heating and stirring with a mixer. While the amount of the surface treatment agent is not critical, it is generally in the range of 0.05 to 5 weight % with respect to the alumina micropowder (B).

The component (B) content is 50 to 600 parts by weight of, preferably 80 to 500 parts by weight of component (A). An adequate thermal conductivity cannot be imparted to the silicone rubber at contents below the lower limit on the aforementioned range, while exceeding the upper limit on this range causes an excessive increase in the viscosity of the inventive composition and thus impairs the workability. If component (B) is an irregular shape alumina micropowder, the addition of 180 to 400 parts by weight of component (B) per 100 parts by weight of component (A) is preferred in particular when the thermal conductivity of the inventive composition is to be brought to ≥ 0.5 W/(m.K). If component (B) is a spherical shape alumina micropowder, the addition of 180 to 600 parts by weight of component (B) per 100 parts by weight of component (A) is preferred in particular when the thermal conductivity of the inventive composition is to be brought to ≥ 0.5 W/(m.K).

The iron oxide micropowder (C) functions to improve the strength and adhesive strength and hardness stability under heating of the cured material afforded by the inventive composition. The shape of component (C) is not critical and this component may be spherical, acicular, rhombic, dice shaped, or irregular.

The average particle size of component (C) is in the range from 0.01 to 0.5 µm and preferably is in the range from 0.1 to 0.4 µm. A worsening of the workability occurs at below the lower limit on the aforementioned range, while component (C) undergoes sedimentation during long-term storage of the inventive composition when the upper limit on the aforementioned range is exceeded. Two or more components (C) with different average particle sizes may be combined. The iron oxide may be, for example, ferric oxide (iron oxide red) or ferrosoferric oxide (iron oxide black). The surface of component (C) can also be treated with a surface treatment agent as described above. This surface treatment may be carried out by the same procedures as described above.

The component (C) content is 20 to 100 parts by weight and preferably 20 to 50 parts by weight per 100 parts by weight of component (A). The adhesive strength and hardness stability under heating of the cured material afforded by the inventive composition are inadequate below the aforementioned range. Exceeding the upper limit on the aforementioned range results in a substantial increase in the pre-cure viscosity of the inventive composition and in a loss of processability.

For the purpose of optimum handling and dispersibility the iron oxide micropowder (C), is preferably introduced into the composition in the form of a paste. The paste is in the form of a microdispersion of iron oxide micropowder (C) in a portion of component (A). The component (C) content in the paste is not critical, but is preferably in the range of 10 to 80 weight % to ensure optimum handling characteristics. This paste is readily prepared by adding component (C) to a prescribed quantity of component (A) and producing a uniform microdispersion using, for example, a three-roll mill.

Component (D), which is cerium oxide micropowder, cerium hydroxide micropowder, or cerium-containing heteroorganosiloxane, interacts synergistically with component (C) to improve the adhesive strength and hardness stability under heating of the cured material afforded by the inventive composition. At a component (D) content below 0.1 part the adhesive strength and hardness stability under heating of the cured material from the inventive composition will not necessarily evidence improvement. Additions in excess of 2.0 parts by weight afford no additional property improvements, and the range of 0.1 to 2.0 parts by weight per 100 parts by weight of component (A) is therefore preferred for economic reasons.

The cerium oxide micropowder and cerium hydroxide micropowder preferably have an average particle size of 0.01 to 10 µm. For the purpose of optimum handling and dispersibility the cerium oxide micropowder or cerium hydroxide micropowder (D), is preferably introduced into the composition in the form of a paste. The paste is in the form of a microdispersion of cerium oxide micropowder or cerium hydroxide micropowder (D) in a portion of component (A). The component (D) content in the paste is not critical, but is preferably in the range of 10 to 80 weight % to ensure optimum handling characteristics. This paste is readily prepared by adding component (D) to a prescribed quantity of component (A) and producing a uniform microdispersion using, for example, a three-roll mill.

The cerium-containing heteroorganosiloxane is organosiloxane that contains at least one unit in which a cerium atom is bonded through an oxygen atom to a silicon atom. This organosiloxane is preferably an oligomer. The silicon-bonded organic groups are preferably the same monovalent hydrocarbon as defined for R in component (A). This cerium-containing heteroorganosiloxane may be, for example, the reaction product of a cerium organocarboxylate salt and an organosiloxane unit-containing alkali metal silanolate, as described in Japanese Examined Patent Application Publication Number (hereinafter referred to as Kokoku) Sho 61-24377 (24,377/1986); or the reaction product of cerium chloride and organosiloxane unit-containing alkali metal silanolate, as described in Kokoku Sho 53-980 (980/1978); or the composition afforded by adding an organocarboxylate salt or alkoxy compound of titanium to the reaction product of a cerium organocarboxylate salt and an alkali metal silanolate, as described in Kokoku Sho 53-12541 (12,541/1978).

Among the preceding possibilities, cerium oxide micropowder is preferred for its ease of acquisition and cost advantages and because it has little influence on the viscosity of the composition according to the present invention.

Component (E) is a diorganopolysiloxane that contains at least two silicon-bonded hydrogen atoms in each molecule. This component induces cure of the inventive composition. The molecular structure of component (E) is not critical, and component (E) can have, for example, a straight chain, partially branched straight chain, branched chain, or cyclic molecular structure, wherein straight chain and partially branched straight chain molecular structures are particularly preferred. The viscosity of component (E) is also not specifically restricted and, for example, a viscosity at 25°C in the range of 3 to 10,000 centipoise is preferred and a viscosity at 25°C in the range of 3 to 300 centipoise is more preferred. The bonding position of the silicon-bonded hydrogen atoms in component (E) is also not critical, and the silicon-bonded hydrogen may be bonded in molecular chain terminal or pendant position. The non-hydrogen silicon-bonded groups in component (E) may be exemplified by alkyl groups such as methyl, ethyl, and propyl; aryl groups such as phenyl, tolyl, and xylyl; aralkyl groups such as benzyl and phenethyl; and halogenated alkyl groups such as 3-chloropropyl and 3,3,3-trifluoropropyl. Methyl is particularly preferred among the preceding. When component (A) contains two silicon-bonded alkenyl in each molecule, component (E) must contain at least three silicon-bonded hydrogen atoms in each molecule.

Component (E) may be exemplified by the following:
dimethylhydrogensiloxy-endblocked dimethylpolysiloxanes; dimethylhydrogensiloxy-endblocked methylhydrogenpolysiloxanes; dimethylhydrogensiloxy-endblocked dimethylsiloxane-methylhydrogensiloxane copolymers; trimethylsiloxy-endblocked methylhydrogenpolysiloxanes; trimethylsiloxy-endblocked dimethylsiloxane-methylhydrogensi loxane copolymers; silanol-endblocked methylhydrogenpolysiloxanes; silanol-endblocked dimethylsiloxane-methylhydrogensiloxane copolymers; organopolysiloxanes comprising the (CH₃)₃SiO_{1/2} siloxane unit, (CH₃)₂HSiO_{1/2} siloxane unit, and SiO_{4/2} siloxane unit; organopolysiloxane comprising the (CH₃)₂HSiO_{1/2} siloxane unit and SiO_{4/2} siloxane unit; organopolysiloxanes comprising the (CH₃)HSiO_{2/2} siloxane unit, CH₃SiO_{3/2} siloxane unit, and HSiO_{3/2} siloxane unit; organopolysiloxane as afforded by replacing a portion of the methyl in the preceding organopolysiloxanes with phenyl, 3,3,3-trifluoropropyl, etc.; and mixtures of two or more of the preceding organopolysiloxanes.

Component (E) is added in a quantity such that the ratio of silicon-bonded hydrogen in Component (E) per mole of alkenyl groups in component (A) is from 0.3 to 5 : 1 and preferably from 0.5 to 3 : 1. The crosslink density in cured products made from the composition of the present invention is too low when the ratio is below the lower limit on the aforementioned range, which can have a negative influence on the heat resistance of the cured silicone rubber. A dehydrogenation reaction is produced when the upper limit on the aforementioned range is exceeded, which can create the problem of hydrogen bubble formation and can have a negative influence on the heat resistance.

The platinum catalyst (F) is a catalyst that accelerates cure of the composition according to the present invention, and in general those compounds known as catalysts of the hydrosilylation reaction may be used. This component may be exemplified by finely divided platinum, chloroplatinic acid, alcohol modifications of chloroplatinic acid, chelate compounds of platinum, platinum/diketone complexes, chloroplatinic acid/olefin coordination compounds, chloroplatinic acid/alkenylsiloxane complexes, and the preceding supported on a carrier such as alumina, silica, and carbon black. Chloroplatinic acid/alkenylsiloxane complexes are preferred among the preceding for their high activity as hydrosilylation catalysts. The platinum/alkenylsiloxane complexes disclosed in Kokoku Sho 42-22924 (22,924/1967) are particularly preferred. Also usable are finely divided spherical catalysts composed of thermoplastic resin containing at least 0.01 weight % (as platinum metal atoms) platinum catalyst. Component (F) is added to the inventive composition in a catalytic quantity, and an addition sufficient to induce cure of the inventive composition is satisfactory. In general, however, this component is added at preferably 0.01 to 500 parts by weight as platinum metal per 1,000,000 parts by weight of component (A) and particularly preferably at 1 to 50 parts by weight as platinum metal per 1,000,000 parts by weight of component (A).

The composition according to this invention is obtained by intermixing the above-described components (A) to (F) to homogeneity. However, in addition to these components, the composition may contain, insofar as the object of this invention is not impaired, the various additives known for addition to silicone rubber compositions. These additives may be exemplified by pigments, flame retardants, internal release agents, electroconductive fillers for elimination of static, extender fillers, plasticizers, etc. A cure inhibitor is preferably added in order to improve the handling characteristics and storage stability of the composition of the present invention. This cure inhibitor may be, for example, an acetylenic compound such as 2-methyl-3-butyn-2-ol, 2-phenyl-3-butyn-2-ol, 3,5-dimethyl-1-hexyn-3-ol, 1-ethynyl-1-cyclohexanol, 1,5-hexadiyne, and 1,6-heptadiyne; en-yne compounds such as 3,5-dimethyl-1-hexen-1-yne, 3-ethyl-3-buten-1-yne, and 3-phenyl-3-buten-1-yne; alkenylsiloxane oligomers such as 1,3-divinyltetramethyldisiloxane, 1,3,5,7-tetravinyltetramethylcyclotetrasiloxane, and 1,3-divinyl-1,3-diphenyldimethyldisiloxane; ethynyl-functional silicon compounds such as methyltris(3-methyl-1-butyn-3-oxy)silane; nitrogenous compounds such as tributylamine, tetramethylethylenediamine, and benzotriazole; phosphorus-containing compounds such as triphenylphosphine; as well as sulfur-containing compounds, hydroperoxy compounds, hydrazines, and maleic acid derivatives. The content of these cure inhibitors is preferably in the range of 0.001 to 5 parts by weight per 100 parts by weight of component (A).

A microparticulate reinforcing silica with a specific surface area of at least 50 m²/g may be added in order to obtain additional improvements in the strength of the cured material afforded by the inventive composition. Within the sphere of hydrophilic silicas, this reinforcing silica may be specifically exemplified by dry-method silicas such as Aerosil 50, 130, 200, and 300 (products of Nippon Aerosil Co., Ltd., and Degussa AG), Cab-o-Sil MS-5, MS-7, and MS-75 (products of Cabot Corporation), and Rheorosil QS-102 and QS-103 (products of Tokuyama Corporation), and by wet-method silicas such as Nipsil LP (product of Nippon Silica Industrial Co., Ltd.). With regard to hydrophobic silicas as afforded by surface treatment of the aforementioned hydrophilic silicas, this reinforcing silica may be exemplified by Aerosil R-812, R-812S, R-972, and R-974 (products of Degussa AG), Rheorosil MT-10 (product of Tokuyama Corporation), and the Nipsil SS series (products of Nippon Silica Industrial Co., Ltd.). These microparticulate reinforcing silicas are preferably added at 0.1 to 80 parts by weight per 100 parts by weight of component (A), more preferably at 5 to 50 parts by weight per 100 parts by weight of component (A), and most preferably at 5 to 10 parts by weight per 100 parts by weight of component (A).

An SiH-free organopolysiloxane resin i.e. lacking silicon-bonded hydrogen may be used for the same purpose. This SiH-free organopolysiloxane resin may be exemplified by organopolysiloxane comprising the (CH₃)₃SiO_{1/2} siloxane unit and SiO_{4/2} siloxane unit; organopolysiloxane comprising the CH₂=CH(CH₃)₂SiO_{1/2} siloxane unit, (CH₃)₃SiO_{1/2} siloxane unit, and SiO_{4/2} siloxane unit; and
organopolysiloxane comprising the CH₂=CH(CH₃)₂SiO_{1/2} siloxane unit, (CH₃)₃SiO_{1/2} siloxane unit, and SiO_{3/2} siloxane unit. The content of this organopolysiloxane resin preferably is 0.1 to 80 parts by weight per 100 parts by weight of component (A) and more preferably is 1 to 50 parts by weight per 100 parts by weight of component (A).

The thermoconductive addition-curable liquid silicone rubber composition according to this invention may be prepared by intermixing components (A) to (F) and any of the above-described optional components to homogeneity using a known mixing/kneading means such as a two-roll mill, Banbury mixer, kneader mixer, planetary mixer, Ross mixer, Hobart mixer, etc.

In order to improve the storage stability at around room temperature and maintain an excellent post-storage curability in such applications as co-molding, the composition according to this invention is preferably formulated as a two-package silicone rubber composition divided into a composition containing at least components (A) and (F) but not containing component (E) and a composition containing at least components (A) and (E) but not containing component (F).

The inventive thermoconductive addition-curable liquid silicone rubber composition obtained as described above may be molded as desired by known molding methods. The inventive composition can in particular be cured by, for example, press molding, extrusion molding, transfer molding, injection molding, calender molding, and coating molding, and may be processed not just into sheet but also into moldings with various shapes. In addition, unified composites with a variety of substrates may be readily prepared by curing the inventive composition while in contact with a substrate such as primer-coated metal. The molding temperature is generally at least 80°C and is preferably in the range from 100 to 180°C. The addition curing reaction in hydrosilylation-based silicone rubbers will proceed even below the lower limit on the aforementioned temperature range, but the use of such temperatures can require long molding times and can result in the failure to obtain an acceptable adhesive strength in the fabrication of a composite article through adherence to another article. A post-vulcanization for several hours at 150 to 300°C is preferably implemented in order to stabilize the post-cure physical properties.

The composition according to the present invention has a thermal conductivity of at least 0.3 W/(m.K). The thermal conductivity may be readily measured using, for example, a QTM-500 Quick Thermal Conductivity Meter from Kyoto Electronics Manufacturing Co., Ltd.

Surface treatment of the surface of the alumina micropowder (B) with, for example, organoalkoxysilane or tetraalkoxysilane or its partial hydrolysis and condensation product can improve the handling characteristics by reducing the viscosity of the inventive composition and can improve the storage stability by preventing sedimentation of the alumina micropowder (B).

In addition, the handling characteristics of component (C) and its dispersibility in component (A) are improved when the iron oxide micropowder (C) takes the form of a paste afforded by preliminary microdispersion in a portion of the diorganopolysiloxane (A).

A composition in accordance with the present invention is preferably used in heat fixing rolls employed in, for example, electrophotographic copiers, electronic printers, and facsimile machines.

This invention further relates to a fixing roll prepared using the thermally conductive silicone rubber composition described above. A fixing roll in accordance with the present invention comprises a roll shaft having an outer layer of fluororesin or fluororubber formed on the outer surface thereof and having an interposed silicone rubber layer comprising the cured product of the composition in accordance with the present invention.

The roll shaft is made of a material exemplified by iron, stainless steel, copper, and aluminum. The silicone rubber forming the silicone rubber layer is produced by curing the composition in accordance with the present invention.

The fluororesin forming the fluororesin layer can be exemplified by polytetrafluoroethylene resins (PTFE), tetrafluoroethylene-perfluoroalkyl vinyl ether copolymer resins (PFA), ethylene fluoride-polypropylene copolymer resins (FEP), tetrafluoroethylene-ethylene copolymer resins (ETFE), polychlorotrifluoroethylene copolymer resins (PCTFE), polyvinylidene fluoride resins (PVDF), polyvinyl fluoride resins (PVF), chlorotrifluoroethylene-ethylene copolymer resins (ECTFE), and tetrafluoroethylene-hexafluoropropylene copolymer resins (FEP).

The fluororubber forming the fluororubber layer is exemplified by vinylidene fluoride-hexafluoropropylene copolymer rubbers (VDF-HFP), vinylidene fluoride-hexafluoropropylene-tetrafluoroethylene copolymer rubbers (VDF-HFP-TFE), and tetrafluoroethylene-propylene copolymer rubbers (TFE-Pr). The fluororesin or fluororubber layer is preferably no more than 0.1 mm thick and particularly preferably is from 0.1 to 50 µm thick.

The fixing roll of this invention can be fabricated using the thermally conductive silicone rubber composition by, for example, mounting the metal roll shaft in a roll-forming mold, installing a fluororesin or fluororubber tube on the interior wall of the roll-forming mold, pressing the thermally conductive silicone rubber composition into the cavity between the roll shaft and the tube, and then curing the silicone rubber composition. Alternatively, the fixing roll can be fabricated by mounting the metal roll shaft in the roll-forming mold, injecting the thermally conductive silicone rubber composition, curing the silicone rubber composition, then coating the outer surface of the resulting silicone rubber roll with fluororesin or fluororubber, and finally heating. The former method is preferred. In this preferred method, the exterior surface of the roll shaft and the interior surface of the fluororesin or fluororubber tube are preferably treated with a primer in a preliminary step to improve the adhesiveness between the roll shaft and silicone rubber layer and between the silicone rubber layer and the fluororesin or fluororubber tube. The thermally conductive silicone rubber composition can be pressed into the cavity between the roll shaft and the fluororesin or fluororubber tube using, for example, a compression molder, transfer molder, or injection molder. The curing temperature is preferably from 30°C to 200°C because, when the curing temperature for the thermally conductive silicone rubber composition is very low, the cure rate will be slow and the fixing roll production rate will suffer from a substantial decline. However, at very high curing temperatures, wrinkles or creases will be produced in the surface of the fixing roll. Curing temperatures from 50°C to 150°C are particularly preferred. To diminish the compression set of silicone rubber produced by curing at relatively low temperatures, it is preferably submitted to additional heat treatment at 150°C to 250°C.

The fixing roll of this invention has a large rebound despite also having an excellent thermal conductivity. The fixing roll is very durable in copying applications. This combination of properties is obtained because the fluororesin or fluororubber layer is formed over the exterior surface of the roll shaft separated therefrom by an intervening layer of silicone rubber generated by curing the thermally conductive silicone rubber composition. As a result, the fixing roll of this invention is well suited for use in equipment such as electrophotographic copiers, printers, facsimile machines, and so forth.

### EXAMPLES

While examples and comparative examples are provided below in order to specifically explain the present invention, the present invention is not limited to these examples. Parts in the examples denotes parts by weight. The values reported for viscosity were measured at 25°C. The viscosity values reported for the compositions prepared in the working and comparative examples were measured at 25°C using a BH rotary viscometer (rotor no. 7,10 rpm) from Tokyo Keiki Co., Ltd.

### Method for measuring the hardness:

The hardness measurement test specimen (thickness = 6 mm) was prepared by press-molding the inventive composition for 10 minutes at 120°C (clamping pressure = 50 tons) and then holding for 4 hours in a convection oven at 200°C. The hardness of the test specimen was measured according to JIS K 6249. In addition, in order to measure the change in hardness, a test specimen whose hardness had been measured in this manner was placed in a 230°C oven, withdrawn after the specified time, and submitted to hardness measurement as before.

### Method for measuring the initial physical properties:

The other initial physical properties were measured as follows. The silicone rubber test specimen (thickness = 2 mm) for physical property measurement was prepared by press-molding the inventive composition for 10 minutes at 120°C (clamping pressure = 50 tons) and then holding for 4 hours in a convection oven at 200°C. The tensile strength and elongation of the test specimen were measured according to JIS K 6249. For the compression set and rebound resilience, a test specimen according to JIS K 6249 was fabricated using the conditions reported above and the compression set was measured by the method described in JIS K 6249 and the rebound resilience was measured by the method described in JIS K 6255.

### Method for measuring the thermal conductivity:

The silicone rubber test specimen (thickness = 12 mm) for measurement of the thermal conductivity was prepared by press-molding the inventive composition for 10 minutes at 120°C (clamping pressure = 50 tons) and then holding for 4 hours in a convection oven at 200°C. The thermal conductivity of the resulting test specimen was measured using a QTM-500 Quick Thermal Conductivity Meter from Kyoto Electronics Manufacturing Co., Ltd.

### Procedure for evaluating the strength and adherence of an aluminum panel composite:

A commercially available silane primer (DY39-067 from Dow Coming Toray Silicone Co., Ltd.) was uniformly coated on the surface of an aluminum test panel (A5052P, 7.5 cm × 2.5 cm × 1 mm, from Kabushiki Kaisha PALTEC) and was dried for 60 minutes at 25°C and 60% relative humidity. After this test panel had been installed in a mold cavity, the inventive composition was poured in and an aluminum panel composite test specimen was fabricated by press-molding for 10 minutes at 120°C (clamping pressure = 50 tons) and then holding for 4 hours in a convection oven at 200°C. A silicone rubber layer with a thickness of 5 mm was formed on the aluminum panel composite test specimen.

Incisions (2 mm width × 1.25 cm length × 5 mm depth) were introduced with a cutter into the silicone rubber layer on this test specimen and the silicone rubber layer on the aluminum panel was divided into 60 rubber sections. Each rubber section was connected to a tensile tester (Autograph AGC-50D from Shimadzu) and a 90° peel test was carried out at a speed of 50 mm/minute. During this test, the force required to separate the rubber sections and the aluminum panel was recorded in order to measure the rupture strength of the test specimen. The adherence was also evaluated by inspecting the cohesive failure ratio of the rupture surface. The load required for rubber section separation was divided by the rubber section width to give the rupture strength value.

An aluminum panel composite test specimen as described above was also introduced into a 230°C oven and was thermally aged for the specified time period. The rupture strength and adherence of the test specimen were then evaluated as described above.

### Evaluation of the adherence to fluororesin:

A fluororesin (PFA) tube whose interior surface had been subjected to a chemical etch with a sodium metal/liquid ammonia solution was cut into a strip (4.0 cm × 7.0 cm). A commercially available silane primer (DY39-067 from Dow Coming Toray Silicone Co., Ltd.) was uniformly coated on the side corresponding to the tube interior and was dried for 60 minutes at 25°C and 60% relative humidity. This was installed in a mold cavity in such a manner that the primer-treated surface was the upper surface, the inventive composition was poured in, and a silicone rubber layer with a thickness of about 6 mm was formed by press-molding for 10 minutes at 120°C and then holding for 4 hours in a convection oven at 200°C.

The resulting adhesion test specimen was cut into a strip (length 4.0 cm × width 1.0 cm × thickness 0.6 cm) and a 180° peel test was carried out at a speed of 50 mm/minute. The adherence was evaluated by inspecting the cohesive failure ratio of the adhesion rupture surface.

An adhesion test specimen as described above was also introduced into a 230°C oven and was thermally aged for the specified time period. The adherence was then evaluated as described above.

### Evaluation of roll durability:

A commercially available silane primer (DY39-067 from Dow Coming Toray Silicone Co., Ltd.) was coated on an aluminum core (diameter 80 mm × length 400 mm) and was dried for 60 minutes at 25°C and 60% relative humidity. The inventive silicone rubber composition was then coated on the cylinder followed by curing by heating for 30 minutes at 150°C and secondary curing for 4 hours at 200°C to give a 6 mm-thick silicone rubber layer on the aluminum core. The surface of this silicone rubber layer was spray coated with a primer (GLS-103SR from Daikin Industries, Ltd.) for fluororubbers and, after drying for 10 minutes at 50°C, a fluororubber latex (Dai-El Latex GLS-213 from Daikin Industries, Ltd.) was applied by spray coating. Baking for 30 minutes at 320°C then gave a silicone rubber-coated roll having a fluororubber surface layer.

Rolls fabricated as described above were installed as the fixing rolls in a plain paper copier. A roll durability evaluation test was carried out by passing 60 sheets of white paper per minute between the fixing rolls while applying a nip load of 2450 N and using a heater temperature in the fixing section of 190°C.

### Reference Example 1. Preparation of iron oxide-containing diorganopolysiloxane paste:

40 parts iron oxide micropowder (average particle size = 0.17 µm, Bayferrox 130M from Bayer AG) were blended and uniformly mixed into 60 parts dimethylvinylsiloxy-endblocked dimethylpolysiloxane (viscosity = 10,000 mPa·s, vinyl content = 0.13 weight %). Passage 3 times through a three-roll mill then gave the iron oxide-containing diorganopolysiloxane paste.

### Example 1

The following were introduced into a Ross mixer: 40 parts trimethylsiloxy-endblocked dimethylsiloxane-methylvinylsiloxane copolymer (viscosity = 7,000 mPa·s, vinyl content = 0.30 weight %), 280 parts alumina micropowder with an average particle size of 2.0 µm (Alumina AL-43ME from Showa Denko Kabushiki Kaisha), 100 parts of the iron oxide-containing diorganopolysiloxane paste prepared in Reference Example 1, and 0.5 part tetra(n-propoxy)silane as surface treatment agent. After stirring at room temperature for 30 minutes, stirring was then carried out under reduced pressure for 90 minutes with heating at 170°C. After cooling to room temperature, the following were introduced with mixing to homogeneity:
3.3 parts dimethylhydrogensiloxy-endblocked dimethylpolysiloxane (viscosity =10 mPa·s, silicon-bonded hydrogen content = 0.16 weight %, this quantity of addition gave 0.5 mole silicon-bonded hydrogen in this dimethylhydrogensiloxy-endblocked dimethylpolysiloxane per 1 mole vinyl in the aforementioned dimethylsiloxane-methylvinylsiloxane copolymer), 0.73 part trimethylsiloxy-endblocked dimethylsiloxane-methylhydrogensiloxane copolymer (viscosity = 5 mPa·s, silicon-bonded hydrogen content = 0.75 weight %, this quantity of addition gave 0.5 mole silicon-bonded hydrogen in this dimethylsiloxane-methylhydrogensiloxane copolymer per 1. mole vinyl in the aforementioned dimethylsiloxane-methylvinylsiloxane copolymer),
0.25 part cerium oxide micropowder (high-purity cerium oxide from Anan Kasei Co., Ltd.), and
0.15 part 3,5-dimethyl-1-hexyn-3-ol as cure inhibitor.
This was followed by the introduction with mixing to homogeneity of 0.5 part isopropanolic chloroplatinic acid solution (platinum metal content = 5 weight %) to give a thermoconductive addition-curable liquid silicone rubber composition. The viscosity of the resulting composition was 100 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Example 2

A thermoconductive addition-curable liquid silicone rubber composition was prepared as in Example 1, but in this example using 295 parts of the alumina micropowder and 63 parts of the iron oxide-containing diorganopolysiloxane paste prepared in Reference Example 1 and also adding 22 parts of the dimethylvinylsiloxy-endblocked dimethylpolysiloxane (viscosity = 10,000 mPa·s, vinyl content = 0.13 weight %) used in Reference Example 1. The viscosity of the resulting composition was 100 Pa.s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Example 3

A thermoconductive addition-curable liquid silicone rubber composition was prepared as in Example 1, but in this example adding 5 parts hydrophobic dry-method silica (Rheorosil DM30, surface treated with dimethyldichlorosilane, product of Tokuyama Corporation) at the same time as the alumina micropowder. The viscosity of the resulting composition was 180 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Example 4

The following were introduced into a Ross mixer: 40 parts trimethylsiloxy-endblocked dimethylsiloxane-methylvinylsiloxane copolymer (viscosity = 7,000 mPa·s, vinyl content = 0.30 weight %), 280 parts alumina micropowder with an average particle size of 2.0 µm (Alumina AL-43ME from Showa Denko Kabushiki Kaisha), 100 parts of the iron oxide-containing diorganopolysiloxane paste prepared in Reference Example 1, 0.5 part tetra(n-propoxy)silane as surface treatment agent, and 5 parts organopolysiloxane resin with the formula

{[CH₂=CH(CH₃)₂SiO_{1/2}]_{0.001}[(CH₃)₃SiO_{1/2}]_{0.65}(SiO_{4/2})_{1.0}}ₙ

(vinyl content = 0.8 weight %, n is a number that provides a value of 4,600 for the number-average molecular weight of this organopolysiloxane). After stirring at room temperature for 30 minutes, stirring was then carried out under reduced pressure for 90 minutes with heating at 170°C. After cooling to room temperature, the following were introduced with mixing to homogeneity:
4.5 parts dimethylhydrogensiloxy-endblocked dimethylpolysiloxane (viscosity = 10 mPa·s, silicon-bonded hydrogen content = 0.16 weight %, this quantity of addition gave 0.5 mole silicon-bonded hydrogen in this dimethylhydrogensiloxy-endblocked dimethylpolysiloxane per 1 mole vinyl in the aforementioned dimethylsiloxane-methylvinylsiloxane copolymer), 1.0 part trimethylsiloxy-endblocked dimethylsiloxane-methylhydrogensiloxane copolymer (viscosity = 5 mPa·s, silicon-bonded hydrogen content = 0.75 weight %, this quantity of addition gave 0.5 mole silicon-bonded hydrogen in this dimethylsiloxane-methylhydrogensiloxane copolymer per 1 mole vinyl in the aforementioned dimethylsiloxane-methylvinylsiloxane copolymer),
0.25 part cerium oxide micropowder (high-purity cerium oxide from Anan Kasei Co., Ltd.), and
0.15 part 3,5-dimethyl-1-hexyn-3-ol as cure inhibitor.
This was followed by the introduction with mixing to homogeneity of 0.5 part isopropanolic chloroplatinic acid solution (platinum metal content = 5 weight %) to give a thermoconductive addition-curable liquid silicone rubber composition. The viscosity of the resulting composition was 120 Pa·s.

This composition was submitted to measurement by the methods described above of the hardness, initial physical properties, rupture strength and adherence of the aluminum panel composite, and properties after thermal ageing at 230°C. The results are reported in Tables 2a to 6.

### Example 5

A thermoconductive addition-curable liquid silicone rubber composition was prepared as in Example 1, but in this example using 350 parts of the spherical alumina micropowder with an average particle size of 12.0 µm (Alumina AS-40 from Showa Denko Kabushiki Kaisha) instead of alumina micropowder with an average particle size of 2.0 µm used in Example 1, 2.8 parts dimethylhydrogensiloxy-endblocked dimethylpolysiloxane (viscosity = 10 mPa·s, silicon-bonded hydrogen content = 0.16 weight %, this quantity of addition gave 0.43 mole silicon-bonded hydrogen in this dimethylhydrogensiloxy-endblocked dimethylpolysiloxane per 1 mole vinyl in the aforementioned dimethylsiloxane-methylvinylsiloxane copolymer), and 0.61 part trimethylsiloxy-endblocked dimethylsiloxane-methylhydrogensiloxane copolymer (viscosity = 5 mPa·s, silicon-bonded hydrogen content = 0.75 weight %, this quantity of addition gave 0.43 mole silicon-bonded hydrogen in this dimethylsiloxane-methylhydrogensiloxane copolymer per 1 mole vinyl in the aforementioned dimethylsiloxane-methylvinylsiloxane copolymer). The viscosity of the resulting composition was 110 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6

### Comparative Example 1

A thermoconductive addition-curable liquid silicone rubber composition was prepared as in Example 1, but in this case using 38 parts of the iron oxide-containing diorganopolysiloxane paste prepared in Reference Example 1, changing the alumina micropowder addition to 305 parts, and also adding 38 parts of the dimethylvinylsiloxy-endblocked dimethylpolysiloxane (viscosity = 10,000 mPa·s, vinyl content = 0.13 weight %) used in Reference Example 1. The viscosity of the resulting composition was 100 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Comparative Example 2

A thermoconductive addition-curable liquid silicone rubber composition was prepared as in Example 1, but in this case using 60 parts dimethylvinylsiloxy-endblocked dimethylpolysiloxane (viscosity = 10,000 mPa·s, vinyl content = 0.13 weight %) in place of the iron oxide-containing diorganopolysiloxane paste and changing the alumina micropowder addition to 320 parts. The viscosity of the resulting composition was 90 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Comparative Example 3

A thermoconductive addition-curable liquid silicone rubber composition was prepared as in Comparative Example 2, but in this case without the addition of the cerium oxide micropowder. The viscosity of the resulting composition was 90 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Comparative Example 4

A thermoconductive addition-curable liquid silicone rubber composition was prepared as in Example 1, but in this case without the addition of the cerium oxide micropowder. The viscosity of the resulting composition was 90 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Comparative Example 5

A thermoconductive addition-curable liquid silicone rubber composition was prepared as in Example 1, but in this case adding 140 parts quartz micropowder (Crystallite VX-S2 from Kabushiki Kaisha Tatsumori) in place of the alumina micropowder. The viscosity of the resulting composition was 90 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

### Comparative Example 6

A thermoconductive addition-curable liquid silicone rubber composition was prepared as in Comparative Example 2, but in this case adding 310 parts of the alumina micropowder and adding 10 parts hydrophobic dry-method silica (Rheorosil DM30, surface treated with dimethyldichlorosilane, product of Tokuyama Corporation) at the same time as the alumina micropowder. The viscosity of the resulting composition was 280 Pa·s.

This composition was submitted to measurement by the methods described above of the hardness, initial physical properties, rupture strength and adherence of the aluminum panel composite, adherence to fluororesin, and properties after thermal ageing at 230°C. The results are reported in Tables 2a to 6.

Table 1 a reports the quantities of addition for each component for the compositions in Examples 1 to 5.

**Table 1a.**

| | Example 1 | Example 2 | Example 3 | Example 4 | Example 5 |
|---|---|---|---|---|---|
| component (A)-1 | 60 | 60 | 60 | 60 | 60 |
| component (A)-2 | 40 | 40 | 40 | 40 | 40 |
| component (B)-1 | 280 | 295 | 280 | 280 | - |
| component (B)-2 | - | - | - | - | 350 |
| component (C) | 40 | 25 | 40 | 40 | 40 |
| reinforcing silica | - | - | 5 | - | - |
| silicone resin | - | - | - | 5 | - |
| component (D) | 0.25 | 0.25 | 0.25 | 0.25 | 0.25 |
| component (E)-1 | 3.3 | 3.3 | 3.3 | 4.5 | 2.8 |
| component (E)-2 | 0.73 | 0.73 | 0.73 | 1 | 0.61 |
| component (F) | 0.5 | 0.5 | 0.5 | 0.5 | 0.5 |
| surface treatment agent | 0.5 | 0.5 | 0.5 | 0.5 | 0.5 |
| extender filler | - | - | - | - | - |
| cure inhibitor | 0.15 | 0.15 | 0.15 | 0.15 | 0.15 |

Table 1b reports the quantities of addition for each component for the compositions in Comparative Examples 1 to 6.

**Table 1b**

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| component (A)-1 | 60 | 60 | 60 | 60 | 60 | 60 |
| component (A)-2 | 40 | 40 | 40 | 40 | 40 | 40 |
| component (B) | 305 | 320 | 280 | 320 | - | 310 |
| component (C) | 15 | - | 40 | - | 40 | - |
| reinforcing silica | - | - | - | - | - | 10 |
| silicone resin | - | - | - | - | - | - |
| component (D) | 0.25 | 0.25 | - | - | 0.25 | 0.25 |
| component (E)-1 | 3.3 | 3.3 | 3.3 | 3.3 | 3.3 | 3.3 |
| component (E)-2 | 0.73 | 0.73 | 0.73 | 0.73 | 0.73 | 0.73 |
| component (F) | 0.5 | 0.5 | 0.5 | 0.5 | 0.5 | 0.5 |
| surface treatment agent | 0.5 | 0.5 | 0.5 | 0.5 | 0.5 | 0.5 |
| extender filler | - | - | - | - | 140 | - |
| cure inhibitor | 0.15 | 0.15 | 0.15 | 0.15 | 0.15 | 0.15 |

- component (A)-1:: dimethylvinylsiloxy-endblocked dimethylpolysiloxane with a viscosity of 10,000 mPa·s and a vinyl content of 0.13 weight %
- component (A)-2:: trimethylsiloxy-endblocked dimethylsiloxane-methylvinylsiloxane copolymer with a viscosity of 7,000 mPa·s and a vinyl content of 0.30 weight %
- component (B)-1:: alumina micropowder with an average particle size of 2.0 µm and an ignition loss of 0.18 % (Alumina AL-43ME from Showa Denko Kabushiki Kaisha)
- component (B)-2:: spherical alumina micropowder with an average particle size of 12.0 µm and an ignition loss of 0.07 % (Alumina AS-40 from Showa Denko Kabushiki Kaisha)
- component (C):: iron oxide micropowder with an average particle size of 0.17 µm (Bayferrox 130M from Bayer AG)
- component (D):: cerium oxide micropowder with an average particle size of 3.1 µm (high-purity cerium oxide from Anan Kasei Co., Ltd.)
- component (E)-1:: dimethylhydrogensiloxy-endblocked dimethylpolysiloxane (viscosity = 10 mPa·s, silicon-bonded hydrogen content = 0.16 weight %)
- component (E)-2:: trimethylsiloxy-endblocked dimethylsiloxane-methylhydrogensiloxane copolymer (viscosity = 5 mPa·s, silicon-bonded hydrogen content = 0.75 weight %)
- component (F):: isopropanolic chloroplatinic acid solution (platinum metal content = 5 weight %)
- surface treatment agent:: tetra(n-propoxy)silane
- extender filler:: quartz micropowder with an average particle size of 5 µm (Crystallite VX-S2 from Kabushiki Kaisha Tatsumori)
- cure inhibitor:: 3,5-dimethyl-1-hexyn-3-ol

**Table 2a. Initial physical properties of Examples**

| | unit | Ex.1 | Ex.2 | Ex.3 | Ex.4 | Ex.5 |
|---|---|---|---|---|---|---|
| specific gravity | - | 2.25 | 2.24 | 2.25 | 2.25 | 2.43 |
| hardness (JIS type A) | - | 57 | 57 | 60 | 61 | 57 |
| tensile strength | MPa | 4.0 | 3.9 | 4.8 | 4.7 | 3.8 |
| elongation | % | 200 | 190 | 180 | 170 | 190 |
| rebound resilience | % | 58 | 58 | 55 | 55 | 52 |
| thermal conductivity | W/m.K | 1.0 | 1.0 | 1.0 | 1.0 | 1.1 |
| compression set (180°C/22hr25% compression) | % | 11 | 12 | 15 | 15 | 8 |

**Table 2b. Initial physical properties of Comparative Examples**

| | unit | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| specific gravity | - | 2.24 | 2.23 | 2.25 | 2.23 | 1.67 | 2.23 |
| hardness (JIS type A) | - | 57 | 57 | 57 | 57 | 58 | 63 |
| tensile strength | MPa | 3.7 | 3.6 | 4.2 | 3.6 | 3.8 | 2.9 |
| elongation | % | 220 | 220 | 190 | 220 | 190 | 170 |
| rebound resilience | % | 59 | 60 | 58 | 60 | 55 | 50 |
| thermal conductivity | W/m·K | 1.0 | 1.0 | 1.0 | 1.0 | 0.6 | 1.0 |
| compression set (180°C/22 hr 25% compression) | % | 12 | 10 | 12 | 12 | 8 | 20 |

**Table 3. Change in hardness (thermal ageing at 230°C)**

| (JIS type A hardness, test specimen thickness: 6 mm) | | | | | |
|---|---|---|---|---|---|
| | initial | after 170 hours | after 220 hours | after 310 hours | after 480 hours |
| Example 1 | 57 | 57 | 57 | 57 | 58 |
| Example 2 | 57 | 57 | 57 | 58 | 58 |
| Example 3 | 60 | 60 | 60 | 61 | 61 |
| Example 4 | 61 | 61 | 61 | 61 | 62 |
| Example 5 | 57 | 56 | 57 | 58 | 58 |
| Comp. Ex. 1 | 57 | 53 | 53 | 54 | 55 |
| Comp. Ex. 2 | 57 | 51 | 52 | 53 | 57 |
| Comp. Ex. 3 | 57 | 53 | 53 | 53 | 55 |
| Comp. Ex. 4 | 56 | 47 | 52 | 57 | 61 |
| Comp. Ex. 5 | 58 | 54 | 52 | 52 | 52 |
| Comp. Ex. 6 | 63 | 53 | 55 | 56 | 58 |

**Table 4. Rupture strength of aluminum panel composite test specimens**

| (strength unit: N/mm) | | | | | |
|---|---|---|---|---|---|
| | initial | after 170 hours | after 220 hours | after 310 hours | after 480 hours |
| Example 1 | 2.1 | 2.1 | 2.3 | 2.0 | 2.0 |
| Example 2 | 2.0 | 2.0 | 2.0 | 1.9 | 2.0 |
| Example 3 | 2.5 | 2.5 | 2.7 | 2.3 | 2.4 |
| Example 4 | 2.5 | 2.5 | 2.6 | 2.4 | 2.4 |
| Example 5 | 1.9 | 1.9 | 2.0 | 1.9 | 2.0 |
| Comp. Ex. 1 | 1.7 | 1.7 | 1.6 | 1.5 | 1.3 |
| Comp. Ex. 2 | 1.6 | 1.7 | 1.6 | 1.5 | 1.2 |
| Comp. Ex. 3 | 1.7 | 1.8 | 1.8 | 1.7 | 1.7 |
| Comp. Ex. 4 | 0.8 | 1.7 | 1.7 | 1.2 | 1.4 |
| Comp. Ex. 5 | 1.6 | 1.7 | 1.6 | 1.2 | 1.2 |
| Comp. Ex. 6 | 0.8 | 1.7 | 1.6 | 1.4 | 1.2 |

**Table 5. Adherence to aluminum panel (cohesive failure ratio)**

| | | | | | | |
|---|---|---|---|---|---|---|
| cohesive failure ratio: | | | O : ≥ 90% | | | |
| | | | Δ : 50-89% | | | |
| | | | × : ≤ 9% | | | |

| | initial | after 170 hours | | after 220 hours | after 310 hours | after 480 hours |
|---|---|---|---|---|---|---|
| Example 1 | ○ | ○ | | ○ | ○ | ○ |
| Example 2 | ○ | ○ | | ○ | ○ | ○ |
| Example 3 | ○ | ○ | | ○ | ○ | ○ |
| Example 4 | ○ | ○ | | ○ | ○ | ○ |
| Example 5 | ○ | ○ | | ○ | ○ | ○ |
| Comp. Ex. 1 | ○ | △ | | △ | △ | △ |
| Comp. Ex. 2 | △ | △ | | △ | × | × |
| Comp. Ex. 3 | △ | ○ | | △ | △ | △ |
| Comp. Ex. 4 | △ | △ | | △ | × | × |
| Comp. Ex. 5 | △ | △ | | △ | × | × |
| Comp. Ex. 6 | △ | ○ | | △ | × | × |

**Table 6. Adherence to fluororesin (cohesive failure ratio)**

| | | | | | |
|---|---|---|---|---|---|
| cohesive failure ratio: ○ | | | : ≥ 90% | | |
| Δ | | | : 50-89% | | |
| × | | | : ≤ 49% | | |

| | initial | after 170 hours | after 220 hours | after 310 hours | after 480 hours |
|---|---|---|---|---|---|
| Example 1 | ○ | ○ | ○ | ○ | ○ |
| Example 2 | ○ | ○ | ○ | ○ | ○ |
| Example 3 | ○ | ○ | ○ | ○ | ○ |
| Example 4 | ○ | ○ | ○ | ○ | ○ |
| Example 5 | ○ | ○ | ○ | ○ | ○ |
| Comp. Ex. 1 | ○ | △ | △ | × | × |
| Comp. Ex. 2 | △ | △ | × | × | × |
| Comp. Ex. 3 | ○ | ○ | ○ | △ | △ |
| Comp. Ex. 4 | △ | × | × | × | × |
| Comp. Ex. 5 | × | × | △ | △ | × |
| Comp. Ex. 6 | △ | ○ | × | × | × |

### Example 6

Silicone rubber-covered rolls were fabricated using the silicone rubber composition of Example 1. These rolls were submitted to roll durability evaluation testing with the following results: at least 300,000 sheets could be transported through unproblematically and no abnormality whatever was observed in the rolls themselves.

### Example 7

Roll durability evaluation testing was carried out as in Example 6, but in this case using the silicone rubber composition of Example 2 instead of the silicone rubber composition of Example 1. At least 300,000 sheets could be transported through unproblematically and no abnormality whatever was observed in the rolls themselves.

### Example 8

Roll durability evaluation testing was carried out as in Example 6, but in this case using the silicone rubber composition of Example 3 instead of the silicone rubber composition of Example 1. At least 300,000 sheets could be transported through unproblematically and no abnormality whatever was observed in the rolls themselves.

### Example 9

Roll durability evaluation testing was carried out as in Example 6, but in this case using the silicone rubber composition of Example 4 instead of the silicone rubber composition of Example 1. At least 300,000 sheets could be transported through unproblematically and no abnormality whatever was observed in the rolls themselves.

### Example 10

Roll durability evaluation testing was carried out as in Example 6, but in this case using the silicone rubber composition of Example 5 instead of the silicone rubber composition of Example 1. At least 300,000 sheets could be transported through unproblematically and no abnormality whatever was observed in the rolls themselves.

### Comparative Example 7

Roll durability evaluation testing was carried out as in Example 6, but in this case using the silicone rubber composition of Comparative Example 1 instead of the silicone rubber composition of Example 1. Paper creasing occurred at the 10,000th sheet. Inspection of the roll surface showed partial debonding of the fluororubber surface layer.

### Comparative Example 8

Roll durability evaluation testing was carried out as in Example 6, but in this case using the silicone rubber composition of Comparative Example 2 instead of the silicone rubber composition of Example 1. A paper jam occurred at the 82,000th sheet. Inspection of the roll surface showed almost complete debonding of the fluororubber surface layer.

### Comparative Example 9

Roll durability evaluation testing was carried out as in Example 6, but in this case using the silicone rubber composition of Comparative Example 6 instead of the silicone rubber composition of Example 1. A paper jam occurred at the 60,000th sheet. Inspection of the roll surface showed almost complete debonding of the fluororubber surface layer and also revealed partial rupture of the silicone rubber layer with exposure of the aluminum core.

### INDUSTRIAL APPLICABILITY

Articles formed by the cure of this thermoconductive addition-curable liquid silicone rubber composition exhibit a high thermal conductivity and undergo little change in strength and physical properties even when subjected to long-term use under heating. The inventive thermoconductive addition-curable liquid silicone rubber composition can therefore be used with excellent advantage for the fixing rolls and belts in electrophotographic copiers, electronic printers, and facsimile machines. More particularly, due to the excellent adherence to metals and fluororesins and fluororubbers, the inventive thermoconductive addition-curable liquid silicone rubber composition is ideal for use as the silicone rubber in silicone rubber-covered heat fixing rolls in which a silicone rubber surface layer is covered by a fluororesin or fluororubber.

The inventive coated fixing roll can therefore be used with excellent advantage for electrophotographic copies, electronic printers, and facsimile machines.

## Claims

1. A thermoconductive addition-curable liquid silicone rubber composition having a thermal conductivity of at least 0.3 W/(m.K) after curing which comprises
(A) 100 parts by weight of liquid diorganopolysiloxane that has a viscosity of 100 to 100,000 mPa·s and contains at least two silicon-bonded alkenyl groups in each molecule,
(B) 50 to 600 parts by weight of alumina micropowder that has an average particle size of 0.1 to 50 µm,
(C) 20 to 100 parts by weight of iron oxide micropowder that has an average particle size of 0.01 to 0.5 µm,
(D) 0.1 to 2.0 parts by weight of cerium oxide micropowder, cerium hydroxide micropowder, or cerium-containing heteroorganosiloxane,
(E) organopolysiloxane that contains at least two silicon-bonded hydrogen atoms in each molecule, wherein the component (E) content provides from 0.3 to 5 moles silicon-bonded hydrogen in component (E) per 1 mole silicon-bonded alkenyl in component (A), and
(F) platinum catalyst in a catalytic quantity.

2. A thermoconductive addition-curable liquid silicone rubber composition in accordance with claim 1 **characterized in that** the particle shape of the alumina micropowder (B) is spherical or irregular.

3. A thermoconductive addition-curable liquid silicone rubber composition in accordance with any preceding claim **characterized in that** the surface of the alumina micropowder (B) has been treated with a surface treatment agent.

4. A thermoconductive addition-curable liquid silicone rubber composition in accordance with claim 3 **characterized in that** the surface treatment agent is organoalkoxysilane, tetraalkoxysilane, or a partial hydrolysis and/or condensation product of tetraalkoxysilane.

5. A thermoconductive addition-curable liquid silicone rubber composition in accordance with any preceding claim **characterized in that** component (C) is in the form of a paste comprising a microdispersion of component (C) in a portion of component (A).

6. A thermoconductive addition-curable liquid silicone rubber composition in accordance with any preceding claim **characterized in that** component (D) is in the form of a paste comprising a microdispersion of component (D) in a portion of component (A).

7. Use of a thermoconductive addition-curable liquid silicone rubber composition according to any preceding claim in a fixing roll for electrophotographic copiers, electronic printers and facsimile machines.

8. Use in accordance with claim 7 wherein said fixing roll is a coated fixing roll comprising a fluororesin layer or a fluororubber layer disposed on the peripheral surface of a roll shaft, with said thermoconductive addition-curable liquid silicone rubber composition interposed between the fluororesin layer and the roll shaft.

9. A coated fixing roll comprising a fluororesin layer or a fluororubber layer disposed on the peripheral surface of a roll shaft, and a silicone rubber layer interposed between the fluororesin layer or the fluororubber layer and the roll shaft, which silicone rubber layer being the cured product of the thermoconductive addition-curable liquid silicone rubber composition in accordance with any one of claims 1 to 6.

## Patentansprüche

1. Eine wärmeleitfähige durch Addition härtbare flüssige Siliconkautschukzusammensetzung mit einer thermischen Leitfähigkeit von wenigstens 0,3 W/(m.K) nach dem Härten, welche enthält
(A) 100 Gewichtsteile eines flüssigen Diorganopolysiloxans, das eine Viskosität von 100 bis 100.000 mPa·s aufweist und wenigstens zwei siliciumgebundene Alkenylgruppen in jedem Molekül enthält,
(B) 50 bis 600 Gewichtsteile eines Aluminiumoxidmikropulvers, das eine mittlere Teilchengröße von 0,1 bis 50 µm hat,
(C) 20 bis 100 Gewichtsteile eines Eisenoxidmikropulvers, das eine mittlere Teilchengröße von 0,01 bis 0,5 µm hat,
(D) 0,1 bis 2,0 Gewichtsteile eines Ceroxidmikropulvers, Cerhydroxidmikropulvers oder cerhaltigen Heteroorganosiloxans,
(E) Organopolysiloxan, das wenigstens zwei siliciumgebundene Wasserstoffatome in jedem Molekül enthält, wobei der Gehalt der Komponente (E) 0,3 bis 5 mol siliciumgebundenen Wasserstoff in der Komponente (E) pro 1 mol siliciumgebundenes Alkenyl in der Komponente (A) bereitstellt, und
(F) einen Platinkatalysator in einer katalytischen Menge.

2. Eine wärmeleitfähige durch Addition härtbare flüssige Siliconkautschukzusammensetzung gemäß Anspruch 1, **dadurch gekennzeichnet, dass** die Teilchenform des Aluminiumoxidmikropulvers (B) kugelförmig oder unregelmäßig ist.

3. Eine wärmeleitfähige durch Addition härtbare flüssige Siliconkautschukzusammensetzung gemäß einem der vorhergehenden Ansprüche, **dadurch gekennzeichnet, dass** die Oberfläche des Aluminiumoxidmikropulvers (B) mit einem Oberflächenbehandlungsmittel behandelt wurde.

4. Eine wärmeleitfähige durch Addition härtbare flüssige Siliconkautschukzusammensetzung gemäß Anspruch 3, **dadurch gekennzeichnet, dass** das Oberflächenbehandlungsmittel ein Organoalkoxysilan, ein Tetraalkoxysilan oder ein teilweises Hydrolyse- und/oder Kondensationsprodukt von Tetraalkoxysilan ist.

5. Eine wärmeleitfähige durch Addition härtbare flüssige Siliconkautschukzusammensetzung gemäß einem der vorhergehenden Ansprüche, **dadurch gekennzeichnet, dass** die Komponente (C) in Form einer Paste vorliegt, die eine Mikrodispersion der Komponente (C) in einem Teil der Komponente (A) enthält.

6. Eine wärmeleitfähige durch Addition härtbare flüssige Siliconkautschukzusammensetzung gemäß einem der vorhergehenden Ansprüche, **dadurch gekennzeichnet, dass** die Komponente (D) in Form einer Paste vorliegt, die eine Mikrodispersion der Komponente (D) in einem Teil der Komponente (A) enthält.

7. Verwendung einer wärmeleitfähigen durch Addition härtbaren flüssigen Siliconkautschukzusammensetzung gemäß einem der vorhergehenden Ansprüche in einer Fixierwalze für elektrophotographische Kopierer, elektrische Drucker und Faxgeräte.

8. Verwendung gemäß Anspruch 7, wobei die Fixierwalze eine beschichtete Fixierwalze ist, die eine Fluorharzschicht oder eine Fluorkautschukschicht auf der äußeren Oberfläche einer Walzenachse angeordnet aufweist, wobei die wärmeleitfähige durch Addition härtbare flüssige Sililconkautschukzusammensetzung zwischen der Fluorharzschicht und der Walzenachse angeordnet ist.

9. Eine beschichtete Fixierwalze, umfassend eine Fluorharzschicht oder eine Fluorkautschukschicht, angeordnet auf der äußeren Oberfläche einer Walzenachse, und eine Siliconkautschukschicht, angeordnet zwischen der Fluorharzschicht oder der Fluorkautschukschicht und der Walzenachse, wobei die Siliconkautschukschicht das gehärtete Produkt der wärmeleitfähigen durch Addition härtbaren flüssigen Siliconkautschukzusammensetzung gemäß einem der Ansprüche 1 bis 6 ist.

## Revendications

1. Composition de caoutchouc de silicone liquide durcissable par addition, thermoconductrice, ayant une conductivité thermique d'au moins 0,3 W/(m.K) après durcissement qui comprend
(A) 100 parties en poids de diorganopolysiloxane liquide qui a une viscosité de 100 à 100 000 mPa.s et contient au moins deux groupes alcényle liés à du silicium dans chaque molécule,
(B) 50 à 600 parties en poids de micropoudre d'alumine qui a une taille moyenne de particule de 0,1 à 50 µm,
(C) 20 à 100 parties en poids de micropoudre d'oxyde de fer qui a une taille moyenne de particule de 0,01 à 0,5 µm,
(D) 0,1 à 2,0 parties en poids de micropoudre d'oxyde de cérium, de micropoudre d'hydroxyde de cérium ou d'hétéroorganosiloxane contenant du cérium,
(E) un organopolysiloxane qui contient au moins deux atomes d'hydrogène liés à du silicium dans chaque molécule, où la teneur en composant (E) fournit de 0,3 à 5 moles d'hydrogène lié à du silicium pour le composant (E) par mole d'alcényle lié à du silicium dans le composant (A), et
(F) un catalyseur de platine dans une quantité catalytique.

2. Composition de caoutchouc de silicone liquide durcissable par addition, thermoconductrice, selon la revendication 1, **caractérisée en ce que** la forme de particule de la micropoudre d'alumine (B) est sphérique ou irrégulière.

3. Composition de caoutchouc de silicone liquide durcissable par addition, thermoconductrice, selon l'une quelconque des revendications précédentes, **caractérisée en ce que** la surface de la micropoudre d'alumine (B) a été traitée avec un agent de traitement de surface.

4. Composition de caoutchouc de silicone liquide durcissable par addition, thermoconductrice, selon la revendication 3, **caractérisée en ce que** l'agent de traitement de surface est un organoalcoxysilane, un tétraalcoxysilane ou un produit d'hydrolyse et/ou condensation partielle de tétraalcoxysilane.

5. Composition de caoutchouc de silicone liquide durcissable par addition, thermoconductrice, selon l'une quelconque des revendications précédentes, **caractérisée en ce que** le composant (C) se présente sous la forme d'une pâte comprenant une microdispersion du composant (C) dans une partie du composant (A).

6. Composition de caoutchouc de silicone liquide durcissable par addition, thermoconductrice, selon l'une quelconque des revendications précédentes, **caractérisée en ce que** le composant (D) se présente sous la forme d'une pâte comprenant une microdispersion du composant (D) dans une partie du composant (A).

7. Utilisation d'une composition de caoutchouc de silicone liquide durcissable par addition, thermoconductrice, selon l'une quelconque des revendications précédentes, dans un rouleau de fixation pour copieurs électrophotographiques, imprimantes électroniques et télécopieurs.

8. Utilisation selon la revendication 7, dans laquelle ledit rouleau de fixation est un rouleau de fixation enduit comprenant une couche de fluororésine ou une couche de fluorocaoutchouc disposée sur la surface périphérique d'un arbre de rouleau, ladite composition de caoutchouc de silicone liquide durcissable par addition, thermoconductrice, étant interposée entre la couche de fluororésine et l'arbre de rouleau.

9. Rouleau de fixation enduit comprenant une couche de fluororésine ou une couche de fluorocaoutchouc disposée sur la surface périphérique d'un arbre de rouleau, et une couche de caoutchouc de silicone interposée entre la couche de fluororésine ou la couche de fluorocaoutchouc et l'arbre de rouleau, laquelle couche de caoutchouc de silicone est le produit durci de la composition de caoutchouc de silicone liquide durcissable par addition, thermoconductrice, selon l'une quelconque des revendications 1 à 6.
